# EUROPEAN PATENT APPLICATION

(11) **EP 4 538 069 A1**
(43) Date of publication of application: **16.04.2025**
(21) Application number: 23819540.8
(22) Date of filing: 28.04.2023
(51) Int. Cl.: B60G 11/107, B60G 11/04, F16F 1/18, F16F 1/26

(54) **VEHICLE SUSPENSION DEVICE**

(30) Priority: 08.06.2022 JP 2022092887
(71) Applicant: NHK Spring Co., Ltd., Yokohama-shi, Kanagawa 236-0004 (JP)
(72) Inventor: TANAKA, Yusuke, Yokohama-shi, Kanagawa 236-0004 (JP); IINO, Shinji, Yokohama-shi, Kanagawa 236-0004 (JP); SANO, Takamichi, Yokohama-shi, Kanagawa 236-0004 (JP)
(74) Representative: Hoffmann Eitle
(86) International application number: PCT/JP2023/016929
(87) International publication number: WO 2023/238553

(57) **Abstract**

A vehicle suspension device according to the present invention is a suspension device and includes: a leaf spring; a locking member to which one end of the leaf spring is locked; and a holding member configured to hold another end of the leaf spring. The holding member includes: a roller configured to hold the other end of the leaf spring and be rotatable while following displacement of the other end of the leaf spring; and a pressing member facing the roller, and the other end of the leaf spring is provided between the roller and the pressing member.

## Description

### Field

The present invention relates to a vehicle suspension device.

### Background

Conventionally, there has been known a suspension device provided in a vehicle or the like, the suspension device having a buffering function for preventing vibration caused by an uneven road surface from being transmitted to a vehicle body via wheels, thereby improving the ride comfort and the steering stability of the vehicle. Among suspension devices, a leaf spring type suspension device is configured using a leaf spring (See, for example, Patent Literature 1).

In the leaf spring described in Patent Literature 1, one end is fixed to a vehicle body, and the other end is held via a slide seat in a slidable manner. A load is applied from an axle or the like to the leaf spring at the central portion in the longitudinal direction, and the leaf spring is deformed by the load.

### Citation List

### Patent Literature

Patent Literature 1: JP S61-169307 A

### Summary

### Technical Problem

However, in a case where the end of the leaf spring is held by the slide sheet as in Patent Literature 1, durability may deteriorate due to wear caused by friction between the slide sheet and the leaf spring, and abnormal noise may occur due to friction during sliding.

The present invention has been made in view of the above, and an object of the present invention is to provide a vehicle suspension device capable of suppressing a deterioration in durability and an occurrence of abnormal noise caused by friction between a leaf spring and a holding member.

### Solution to Problem

To solve the above-described problem and achieve the object, a vehicle suspension device according to the present invention includes: a leaf spring; a locking member to which one end of the leaf spring is locked; and a holding member configured to hold another end of the leaf spring, wherein the holding member includes: a roller configured to hold the other end of the leaf spring and be rotatable while following displacement of the other end of the leaf spring; and a pressing member facing the roller, and the other end of the leaf spring is provided between the roller and the pressing member.

Moreover, in the above-described vehicle suspension device according to the present invention, the other end of the leaf spring is sandwiched between and held by the roller and the pressing member.

Moreover, the above-described vehicle suspension device according to the present invention further includes a biasing member configured to bias the roller and the pressing member in a direction in which the roller and the pressing member approach each other.

Moreover, in the above-described vehicle suspension device according to the present invention, the pressing member is a roller that is rotatable while following displacement of the other end of the leaf spring.

Moreover, in the above-described vehicle suspension device according to the present invention, at least one recess is formed on an outer circumferential surface of the roller.

Moreover, in the above-described vehicle suspension device according to the present invention, at least one recess is formed on an outer circumferential surface of at least one of the roller and the pressing member.

Moreover, in the above-described vehicle suspension device according to the present invention, the roller includes: a shaft part; and a rotation part provided on an outer circumference of the shaft part, and configured to be rotatable with respect to the shaft part, the rotation part including an elastic material.

Moreover, in the above-described vehicle suspension device according to the present invention, a protrusion protruding in a direction intersecting an axial direction is formed on at least one end side in the axial direction of the roller.

### Advantageous Effects of Invention

According to the present invention, it is possible to suppress a deterioration in durability and an occurrence of abnormal noise caused by friction between the leaf spring and the holding member.

### Brief Description of Drawings

FIG. 1 is a diagram illustrating a configuration of a part of a vehicle including a suspension device according to an embodiment of the present invention.
FIG. 2 is a diagram for explaining a configuration of a leaf spring of the suspension device according to the embodiment of the present invention.
FIG. 3 is a diagram illustrating a configuration of a roller of a suspension device according to a first modification of the present invention.
FIG. 4 is a diagram illustrating a configuration of a roller of a suspension device according to a second modification of the present invention.
FIG. 5 is a view illustrating a configuration of a gripping member of a suspension device according to a third modification of the present invention.

### Description of Embodiments

Hereinafter, a mode for carrying out the present invention (hereinafter, referred to as an "embodiment") will be described with reference to the accompanying drawings. Note that the drawings are schematic, and the relationship between the thickness and the width of each portion, the ratio between the thicknesses of the respective portions, and the like may be different from actual ones, and the drawings may also include portions whose dimensional relationships and ratios differ from each other.

### (Embodiment)

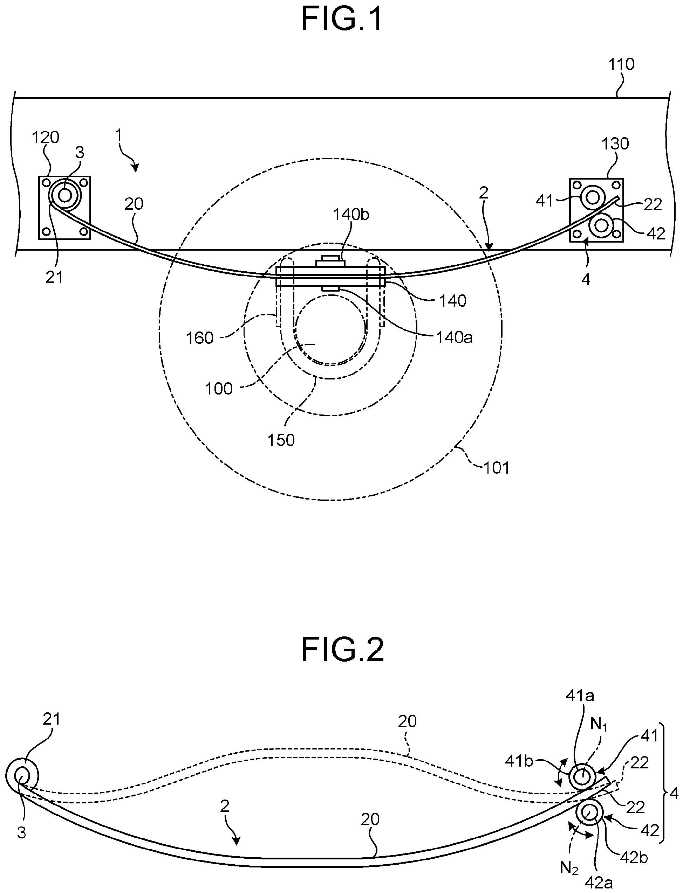

FIG. 1 is a diagram illustrating a configuration of a part of a vehicle including a suspension device according to an embodiment of the present invention. A suspension device 1 illustrated in FIG. 1 is provided on a vehicle body of a vehicle and supports an axle 100 that supports wheels 101. In FIG. 1, the left side is the front of the vehicle, and the right side is the rear of the vehicle.

The suspension device 1 includes a leaf spring 2, a locking member 3 to which one end of the leaf spring 2 is locked, and a holding member 4 that holds the other end of the leaf spring 2 in such a manner as to be movable forward and backward.

The locking member 3 and the holding member 4 are attached to a frame 110. Specifically, the locking member 3 is fixed to a front attachment part 120 fixed to the frame 110. The holding member 4 is fixed to a rear attachment part 130 fixed to the frame 110. The front attachment part 120 and the rear attachment part 130 are fixed to the frame 110 by fastening members such as screws. The locking member 3 is attached to the front attachment part 120 by welding or the like. The holding member 4 is attached to the rear attachment part 130 by welding or the like. The locking member 3 and the holding member 4 may be integrally formed with the front attachment part 120 and the rear attachment part 130, respectively.

Insertion holes (not illustrated) are formed at the center of the leaf spring 2 in the longitudinal direction and at the center of a washer 140. The leaf spring 2 and the washer 140 form a leaf spring assembly fixed by fastening a center bolt 140a inserted into the insertion holes to a nut 140b. The leaf spring assembly is fixed to a housing 160 by a U-bolt 150.

The housing 160 is fixed to the axle 100.

FIG. 2 is a diagram for explaining a configuration of a leaf spring of the suspension device according to the embodiment of the present invention. The leaf spring 2 includes a main body portion 20 formed by bending one end of a strip-shaped member, a hook-shaped first end portion 21 provided on one end side of the main body portion 20, and a second end portion 22 provided on the other end side of the main body portion 20. The axle 100 is disposed below the main body portion 20 at the center of the main body portion 20 in the longitudinal direction. The first end portion 21 is locked by being wound around the locking member 3. The leaf spring 2 is formed using a metal material (e.g., spring steel), a resin material, or fiber reinforced plastics (FRP).

The holding member 4 includes two paired rollers (a first roller 41 and a second roller 42).

The first roller 41 includes a first shaft part 41a connected to the rear attachment part 130 and a first rotation part 41b that is rotatable with respect to the first shaft part 41a. The first rotation part 41b is connected to the first shaft part 41a, for example, via a bearing, and rotates around a central axis N₁ of the first shaft part 41a.

The second roller 42 includes a second shaft part 42a connected to the rear attachment part 130 and a second rotation part 42b that is rotatable with respect to the second shaft part 42a. The second rotation part 42b is connected to the second shaft part 42a, for example, via a bearing, and rotates around a central axis N₂ of the second shaft part 42a.

The distance (gap) between the first roller 41 and the second roller 42 is equal to the thickness of the leaf spring 2. Therefore, in a state where the leaf spring 2 is disposed between the rollers, the first roller 41 and the second roller 42 contact the leaf spring 2 to grip the leaf spring 2. The term "equal" used herein includes manufacturing errors and the like.

The first shaft part 41a and the second shaft part 42a are formed, for example, using a metal material. The first rotation part 41b and the second rotation part 42b are formed, for example, using a metal material, a resin material, rubber, etc. By forming the rotation parts using an elastic material such as rubber or a soft resin, a damper effect can be obtained. Furthermore, the damper effect can be adjusted by adjusting the distance between the first shaft part 41a and the second shaft part 42a.

The first roller 41 and the second roller 42 correspond to a roller and a pressing member which face each other and between which an end portion of the leaf spring 2 is provided.

The leaf spring 2 is deformed as the axle 100 vibrates when a road surface is uneven or the like (see a broken line in FIG. 2). The second end portion 22 is held by the holding member 4 by being sandwiched between the first roller 41 and the second roller 42. When the second end portion 22 is displaced with respect to the holding member 4 by the deformation of the leaf spring 2, the length of the leaf spring 2 between the locking member 3 and the holding member 4, that is, the effective span of the leaf spring 2, changes, and accordingly, the load characteristic of the leaf spring 2 changes. At this time, the first rotation part 41b and the second rotation part 42b rotate according to the displacement of the second end portion 22, thereby making it possible to suppress the generation of friction with the second end portion 22.

In the above-described embodiment of the present invention, in the leaf spring 2 that is deformed as the axle 100 vibrates, one end side is locked to the vehicle body (here, the frame 110), and the other end side is gripped by the first roller 41 and the second roller 42, and the first roller 41 and the second roller 42 rotate as the end portion of the leaf spring 2 on the other end side is displaced when the leaf spring 2 is deformed. According to the present embodiment, the generation of friction between the leaf spring 2 and the holding member 4 can be suppressed by the rotation of the rollers, suppressing a deterioration in durability and an occurrence of abnormal noise caused by the friction between the leaf spring and the holding member.

Here, in a case where an end portion of the leaf spring is held by a slide seat, if the leaf spring 2 is broken forward of the axle, the main body of the leaf spring 2 rotates around the end connecting portion on the rear side, causing the axle to move closer to the vehicle body, resulting in a significant decrease in vehicle height. On the other hand, when the leaf spring 2 is sandwiched by the rollers as in the present embodiment, even if the leaf spring 2 is broken on the front side, a repulsive force is generated on the rear side in the sandwiched state, making it possible to suppress a significant decrease in vehicle height.

Further, according to the present embodiment, by holding the leaf spring 2 with the rollers, the leaf spring 2 can have a nonlinear characteristic with a simple structure as compared with a conventional leaf spring in which a main spring and a sub spring are stacked.

In addition, in the present embodiment, since the thickness of the rotation part with respect to the rotation shaft is uniform, the resistance received by the leaf spring from the rollers can be uniform, thereby improving vibration-proof property and durability.

### (First Modification)

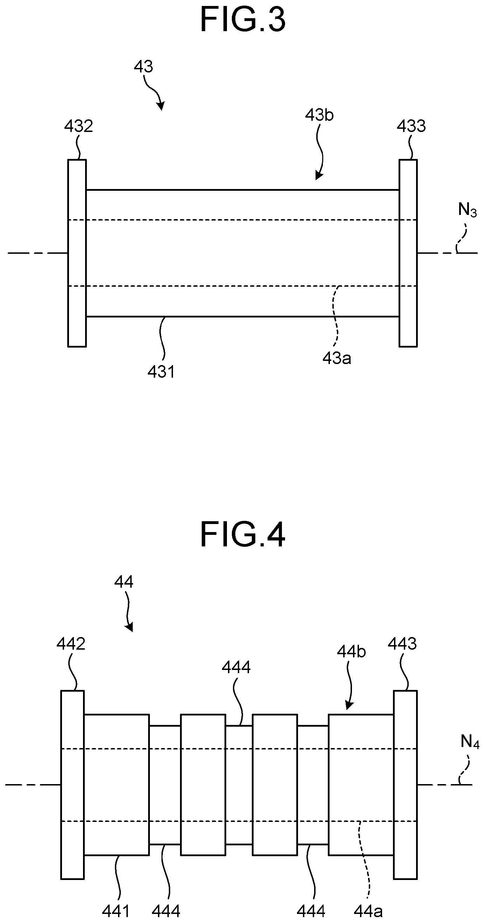

Next, a first modification of the embodiment of the present invention will be described with reference to FIG. 3. FIG. 3 is a diagram illustrating a configuration of a roller of a suspension device according to the first modification of the present invention. The suspension device according to the first modification includes rollers 43 instead of the first roller 41 and the second roller 42 of the holding member 4. Since the other components have the same configurations as those in the embodiment, the description thereof will be omitted.

The roller 43 includes a shaft part 43a connected to the rear attachment part 130 and a rotation part 43b that is rotatable with respect to the shaft part 43a. The rotation part 43b is connected to the shaft part 43a, for example, via a bearing, and rotates around a central axis N₃ of the shaft part 43a.

The rotation part 43b includes a main body portion 431 having a hollow columnar shape for allowing the shaft part 43a to be inserted therethrough, a first protrusion 432 provided on one end side of the main body portion 431 and protruding from an outer circumferential surface of the main body portion 431, and a second protrusion 433 provided on the other end side of the main body portion 431 and protruding from the outer circumferential surface of the main body portion 431.

The first protrusion 432 and the second protrusion 433 protrude to such an extent as not to interfere with protrusions of the other paired roller. The protrusions only need to protrude in a direction intersecting the direction of the central axis N₃.

The second end portion 22 of the leaf spring 2 passes between the first protrusion 432 and the second protrusion 433.

In the first modification described above, similarly to the embodiment, in the leaf spring 2 that is deformed as the axle 100 vibrates, one end side is locked to the vehicle body (here, the frame 110), and the other end side is gripped by the two rollers 43, and the rollers 43 rotate as the end portion of the leaf spring 2 on the other end side is displaced when the leaf spring 2 is deformed. According to the first modification, the generation of friction between the leaf spring 2 and the holding member 4 can be suppressed by the rotation of the rollers 43, suppressing a deterioration in durability and an occurrence of abnormal noise caused by the friction between the leaf spring and the holding member.

Further, according to the first modification, since the leaf spring 2 passes between the first protrusion 432 and the second protrusion 433, it is possible to suppress displacement of the leaf spring 2 in the direction of the central axis N₃.

Note that, in the first modification, one roller may be constituted by the roller 43, and the other roller may be constituted by the first roller 41 or the second roller 42.

Further, in the first modification, the protrusion may be provided only on one end side of the roller 43, and the protrusions of the pair of rollers may be arranged to be located on opposite sides to each other, thereby suppressing the detachment of the leaf spring **2.**

In the first modification, the protrusions are provided at the end portions of the roller 43 in the direction of the central axis N₃. However, the protrusions are not necessarily provided at the end portions as long as the displacement of the leaf spring 2 in the direction of the central axis N₃ can be suppressed while the leaf spring 2 is gripped by the rollers.

### (Second Modification)

Next, a second modification of the embodiment of the present invention will be described with reference to FIG. 4. FIG. 4 is a diagram illustrating a configuration of a roller of a suspension device according to the second modification of the present invention. The suspension device according to the second modification includes rollers 44 instead of the first roller 41 and the second roller 42 of the holding member 4. Since the other components have the same configurations as those in the embodiment, the description thereof will be omitted.

The roller 44 includes a shaft part 44a connected to the rear attachment part 130 and a rotation part 44b that is rotatable with respect to the shaft part 44a. The rotation part 44b is connected to the shaft part 44a, for example, via a bearing, and rotates around a central axis N₄ of the shaft part 44a.

The rotation part 44b includes a main body portion 441 having a hollow columnar shape for allowing the shaft part 44a to be inserted therethrough, a first protrusion 442 provided on one end side of the main body portion 441 and protruding from an outer circumferential surface of the main body portion 441, and a second protrusion 443 provided on the other end side of the main body portion 441 and protruding from the outer circumferential surface of the main body portion 441. The second end portion 22 of the leaf spring 2 passes between the first protrusion 442 and the second protrusion 443.

The first protrusion 442 and the second protrusion 443 protrude to such an extent as not to interfere with protrusions of the other paired roller. The protrusions only need to protrude in a direction intersecting the direction of the central axis N₄.

A plurality of recesses 444 are formed on the outer circumferential surface of the main body portion 441. The recesses 444 extend around the main body portion 441 in the circumferential direction.

In the second modification described above, similarly to the embodiment, in the leaf spring 2 that is deformed as the axle 100 vibrates, one end side is locked to the vehicle body (here, the frame 110), and the other end side is gripped by the two rollers 44, and the rollers 44 rotate as the end portion of the leaf spring 2 on the other end side is displaced when the leaf spring 2 is deformed. According to the second modification, the generation of friction between the leaf spring 2 and the holding member 4 can be suppressed by the rotation of the rollers 44, suppressing a deterioration in durability and an occurrence of abnormal noise caused by the friction between the leaf spring and the holding member.

Further, according to the second modification, since the recesses 444 are formed around the main body portion 441, when foreign matter enters the roller 44 from the outside or foreign matter adhering to the leaf spring 2 comes to adhere to the roller 44, the foreign matter can be accommodated in the recesses 444, thereby maintaining the contact state between the leaf spring 2 and the roller 44 to suppress damage to the leaf spring 2 caused by the foreign matter.

In the second modification, one roller may be constituted by the roller 44, and the other roller may be constituted by the first roller 41, the second roller 42, or the roller 43.

Further, in the second modification, the roller 44 may not have protrusions.

Further, in the second modification, the plurality of recesses 444 extending in the circumferential direction has been described as an example, but the present invention is not limited thereto. For example, one recess 444 may be formed, a recess extending spirally around the axis N₄ may be formed, or a plurality of recesses each having a hole shape (for example, through an embossing process) may be formed.

When the configuration of the second modification is applied to the configuration illustrated in FIG. 2, the recesses may be formed only in one roller, or may be formed in both one roller and the other roller.

### (Third Modification)

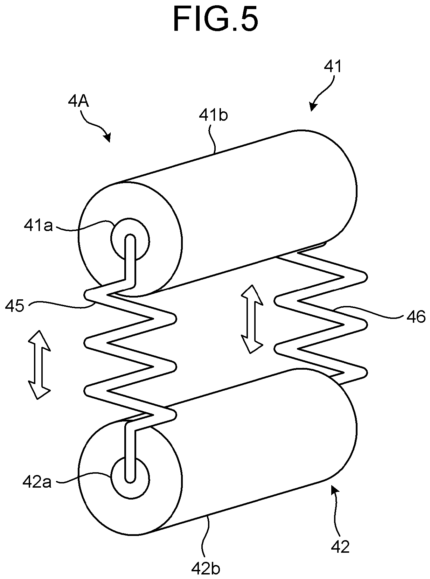

Next, a third modification of the embodiment of the present invention will be described with reference to FIG. 5. FIG. 5 is a diagram illustrating a configuration of a roller of a suspension device according to the third modification of the present invention. The suspension device according to the third modification includes a holding member 4A instead of the holding member 4. The first roller 41 and the second roller 42 of the holding member 4A are attached to the frame 110 in a relatively movable manner. Since the other components have the same configurations as those in the embodiment, the description thereof will be omitted. Note that the same components are denoted by the same reference numerals.

The holding member 4A includes two rollers (a first roller 41 and a second roller 42), a first spring member 45 that connects ends on one end side in the axial direction of the two rollers to each other, and a second spring member 46 that connects ends on the other end side in the axial direction of the two rollers to each other.

The first spring member 45 connects one end side of the first shaft part 41a in the direction of the axis N₁ (see FIG. 2) and one end side of the second shaft part 42a in the direction of the axis N₂ (see FIG. 2) in an extendable manner.

The second spring member 46 connects the other end side of the first shaft part 41a in the direction of the axis N₁ and the other end side of the second shaft part 42a in the direction of the axis N₂ in an extendable manner.

In the third modification, the first roller 41 and the second roller 42 are biased in directions approaching each other by the spring members that are biasing members. For example, the distance (gap) between the rollers in a natural state where no load other than gravity is applied to the spring members is equal to or smaller than the thickness of the leaf spring 2.
Therefore, in a state where the leaf spring 2 is disposed between the rollers, the first roller 41 and the second roller 42 contact the leaf spring 2 to grip the leaf spring 2.

In the third modification described above, similarly to the embodiment, in the leaf spring 2 that is deformed as the axle 100 vibrates, one end side is locked to the vehicle body (here, the frame 110), and the other end side is gripped by the first roller 41 and the second roller 42, and the rollers rotate as the end portion of the leaf spring 2 on the other end side is displaced when the leaf spring 2 is deformed. According to the third modification, the generation of friction between the leaf spring 2 and the holding member 4A can be suppressed by the rotation of each of the rollers, suppressing a deterioration in durability and an occurrence of abnormal noise caused by the friction between the leaf spring and the holding member.

In addition, according to the third modification, the spring members change the distance between the rollers while following the displacement of the leaf spring 2, thereby suppressing the leaf spring 2 from receiving an excessive load from the rollers and preventing the smooth deformation behavior of the leaf spring from being hindered.

In the third modification, it has been described as an example that the spring members are used as members for adjusting the interval between the rollers, but the present invention is not limited thereto. For example, the interval between the rollers may be electrically controlled by an actuator.

Although the mode for carrying out the present invention has been described so far, the present invention should not be limited only to the above-described embodiment. In the embodiment and the modifications described above, it has been described that the axle 100 and the leaf spring 2 are connected to each other via the U-bolt 150. However, for example, the axle 100 and the leaf spring 2 may be directly connected to each other without a U-bolt. In the embodiment and the modifications described above, it has been described that the leaf spring 2 is disposed above the axle 100. However, the leaf spring 2 may be disposed below the axle 100.

In an embodiment, a rotary table that supports the first roller 41 and the second roller 42 may be provided on the rear attachment part 130, and the first roller 41 and the second roller 42 may rotate (revolve) about the rotation axis of the rotary table.

In an embodiment, a holding member 4 may be provided instead of the locking member 3, and both ends of the leaf spring 2 may be gripped by rollers.

Further, in an embodiment, one roller may be a non-rotating holding member (corresponding to the pressing member). For example, a holding member is used instead of the second roller 42, and the leaf spring 2 is held by the first roller 41 and the pressing member. At this time, the holding member may have a curved surface on the side contacting the leaf spring 2, or may have a recess-formed surface on the side contacting the leaf spring 2.

Further, in an embodiment, the first roller 41 and the second roller 42 may be supported by a shackle.

As described above, the present invention can include various embodiments and the like that are not described herein, and various design changes and the like can be made without departing from the technical idea specified by the claims.

### Industrial Applicability

As described above, the vehicle suspension device according to the present invention is suitable for suppressing a deterioration in durability and an occurrence of abnormal noise caused by friction between the leaf spring and the holding member.

### Reference Signs List

1 SUSPENSION DEVICE
2 LEAF SPRING
3 LOCKING MEMBER
4, 4A HOLDING MEMBER
41 FIRST ROLLER
42 SECOND ROLLER
43, 44 ROLLER
41a FIRST SHAFT PART
41b FIRST ROTATION PART
42a SECOND SHAFT PART
42b SECOND ROTATION PART
43a, 44a SHAFT PART
43b, 44b ROTATION PART
45 FIRST SPRING MEMBER
46 SECOND SPRING MEMBER
100 AXLE
101 WHEEL
110 FRAME
120 FRONT ATTACHMENT PART
130 REAR ATTACHMENT PART
140 WASHER
150 U-BOLT
160 HOUSING
431, 441 MAIN BODY PORTION
432, 442 FIRST PROTRUSION
433, 443 SECOND PROTRUSION
444 RECESS

## Claims

1. A vehicle suspension device comprising:
a leaf spring;
a locking member to which one end of the leaf spring is locked; and
a holding member configured to hold another end of the leaf spring, wherein
the holding member includes:
a roller configured to hold the other end of the leaf spring and be rotatable while following displacement of the other end of the leaf spring; and
a pressing member facing the roller, and
the other end of the leaf spring is provided between the roller and the pressing member.

2. The vehicle suspension device according to claim 1, wherein the other end of the leaf spring is sandwiched between and held by the roller and the pressing member.

3. The vehicle suspension device according to claim 1, further comprising:
a biasing member configured to bias the roller and the pressing member in a direction in which the roller and the pressing member approach each other.

4. The vehicle suspension device according to claim 1, wherein the pressing member is a roller that is rotatable while following displacement of the other end of the leaf spring.

5. The vehicle suspension device according to claim 1, wherein at least one recess is formed on an outer circumferential surface of the roller.

6. The vehicle suspension device according to claim 4, wherein at least one recess is formed on an outer circumferential surface of at least one of the roller and the pressing member.

7. The vehicle suspension device according to claim 1, wherein the roller includes:
a shaft part; and
a rotation part provided on an outer circumference of the shaft part, and configured to be rotatable with respect to the shaft part, the rotation part including an elastic material.

8. The vehicle suspension device according to claim 1, wherein a protrusion protruding in a direction intersecting an axial direction is formed on at least one end side in the axial direction of the roller.
